# EUROPÄISCHE PATENTSCHRIFT

(11) **EP 3 370 052 B1**
(45) Veröffentlichungstag und Bekanntmachung des Hinweises auf die Patenterteilung: **12.05.2021**
(21) Anmeldenummer: 17158764.5
(22) Anmeldetag: 01.03.2017
(51) Int. Cl.: G01M 1/04, F01D 5/02, F04D 29/66, F01D 25/28, F04D 25/02

(54) **WUCHTEINRICHTUNG**
BALANCING DEVICE
DISPOSITIF D'ÉQUILIBRAGE

(43) Veröffentlichungstag der Anmeldung: 05.09.2018
(73) Patentinhaber: Christoph Böhmer Betriebsverpachtung GmbH, 57520 Steinebach (DE)
(72) Erfinder: Böhmer, Christoph, 57537 Wissen (DE)
(74) Vertreter: Albrecht, Ralf

(56) Entgegenhaltungen:
- DE-A1-102005 053 786
- US-A- 4 864 859
- US-B2- 9 261 110

## Beschreibung

Die vorliegende Erfindung betrifft eine Wuchteinrichung, insbesondere für Turbolader, mit einem Grundkörper, der eine zentral angeordnete Aufnahme aufweist, in welcher ein zu wuchtendes Rotationselement, insbesondere eine Rumpfgruppe eines Turboladers, axial einschiebbar ist, um das Rotationselement in der Aufnahme um dessen Rotationsachse drehend zu halten, wobei an dem Grundkörper mehrere, um die Aufnahme herum angeordnete Hydraulikzylinder vorgesehen sind, mittels welcher das Rotationselement in der zentralen Aufnahme fixiert oder fixierbar ist.

Wuchteinrichtungen der oben genannten Art zur dynamischen Messung von Unwuchten auf einem Rotationselement sind allgemein bekannt. Insbesondere bei Turboladern ist es notwendig, Drehgeschwindigkeit zwischen 20.000 und über 200.000 Umdrehungen pro Minute und die dabei entstehenden Unwuchten beziehungsweise Vibrationen zu messen.

Dazu wird im Stand der Technik vorgeschlagen, dass Rotationselement - hier in der Form einer Rumpfgruppe eines Turboladers, welche aus einem Verdichterrad und einem Turbinenrad zusammengesetzt ist, die über eine Welle mit einer Wellenmutter zur dynamischen Messung von Unwuchten in einer oder mehreren Ebenen miteinander gekoppelt sind, in die Wuchteinrichtung einzusetzen. Dazu wird die Rumpfgruppe in eine in der Wuchteinrichtung ausgebildete zentrale Aufnahme geschoben und darin fixiert. Anschließend wird das Rotationselement in Drehung versetzt und über Sensoren Unwuchten des Rotationselementes detektiert.

Die Befestigung der Rumpfgruppe in der Wuchteinrichtung erfolgt häufig über an der zentralen Aufnahme angebrachte Bolzen. Nachteilig an einer solchen Lösung ist jedoch, dass die Fixierung der Rumpfgruppe jeweils sehr viel Zeit in Anspruch nimmt, was die Taktzeiten der Wuchteinrichtung deutlich verlängert.

Zur Verringerung der Taktzeiten wurde im Stand der Technik vorgeschlagen, die Rumpfgruppe mit einer Trägerstruktur in der zentralen Aufnahme zu fixieren, wobei die Trägerstruktur parallel zur Rotationsachse der Rumpfgruppe verschoben wird. Diese Form von Trägerstrukturen sind jedoch sehr sperrig und massiv und erhöhen somit die bei dem Wuchtvorgang zu beschleunigenden Massen, was zu einer Verfälschung des Wuchtergebnisses führen kann.

Um diesem Problem zu entgehen, wird in der US 9,261,110 B2 vorgeschlagen, ebenfalls einen Grundkörper vorzusehen, an dem eine Rumpfgruppe in eine in dem Grundkörper ausgebildete zentrale Aufnahme aufgenommen wird. Der Grundkörper ist dabei als Entkopplungselement ausgebildet, welches eine Basisstruktur aufweist, die elastisch eine Stützstruktur umgibt. Die Elastizität wird durch Vorsehen von Federelementen erreicht. Das heißt aus dem Entkopplungselement werden Strukturen derart mittels Drahterosion herausgeschnitten, dass das Basiselement und das Stützelement über sich durch den Erosionsvorgang gebildete Federn miteinander elastisch verbunden sind.

Nachteilig an dieser Ausbildung des Entkopplungselements ist jedoch, dass die Rumpfgruppe über an dem Basiselement befestigte Hydraulikzylinder an der Struktur befestigt werden muss. Um eine damit einhergehende Vergrößerung der Masse entgegenzuwirken, wird in der US 9, 261, 110 B2 vorgeschlagen, zwischen die auf dem Entkopplungselement fixierten und vorgespannten Hydraulikzylinder und die zu fixierenden Rumpfgruppe Fensterelemente vorzusehen, die eine federnde punktuelle Fixierung der Rumpfgruppe innerhalb der zentralen Aufnahme ermöglichen sollen. Diese Fenster sind jedoch sehr aufwändig reproduzierbar herzustellen.

Zum anderen besteht bei einer Fehlbestückung der Wuchteinrichtung wie beispielsweise ein Nichteinsetzen der Rumpfgruppe die Gefahr, dass sich die Hydraulikzylinder nebst Fensterelementen aufgrund der radialen Krafteinwirkung der Hydraulikzylinder zur axialen Fixierung der Rumpfgruppe und der damit einhergehenden Krafteinwirkung auf das Entkopplungselement derart in die Aufnahme hinein bewegen, dass es schließlich zu einem Bruch der zwischen Basisstruktur und Trägerstruktur ausgebildeten Federelemente kommt. Als Folge muss das einteilig ausgebildete Entkopplungselement vollständig erneuert werden, da die zwischen den Basiselement und der Stützelement vorgesehenen Federelemente nicht ersetzt werden können.

Es ist daher Aufgabe der vorliegenden Erfindung, eine Wuchteinrichtung bereitzustellen, die einen einfacheren und sicheren Aufbau aufweist.

Diese Aufgabe wird durch die kennzeichnenden Merkmale des Patentanspruchs 1 gelöst, indem der Grundkörper als Entkopplungsplatte ausgebildet ist, die einen inneren Plattenabschnitt und einen mit dem inneren Plattenabschnitt elastisch verbundenen, den inneren Plattenabschnitt umgebenden, ortsfest angeordneten äußeren Plattenabschnitt aufweist, wobei der Grundkörper mehrere Umfangsschlitze aufweist, über welche der innere Plattenabschnitt vom äußeren Plattenabschnitt federnd entkoppelt ist, derart, dass sich mehrere, voneinander getrennte Halteabschnitte auf der Entkopplungsplatte bilden, wobei die Hydraulikzylinder an den inneren Pattenabschnitt angeordnet oder befestigt sind

Mit anderen Worten ist erfindungsgemäß vorgesehen, von den im Stand der

Technik bekannten einzelnen Federelementen zwischen den Plattenelementen Abstand zu nehmen und stattdessen auf der Entkopplungsplatte in Umfangsrichtung angeordnete Umfangsschlitze vorzusehen, die es ermöglichen, dass sich der innere Plattenabschnitt losgelöst vom ortsfesten fixierten äußeren Plattenabschnitt federnd bewegen kann.

Die Entkopplungsplatte wird durch Vorsehen der Umfangsschlitze in zwei Plattenabschnitte - einen inneren und einen äußeren Plattenabschnitt - aufgeteilt. Dies hat zur Folge, dass der innere Plattenabschnitt durch die Umfangsschlitze von dem äußeren ortsfesten Plattenabschnitt getrennt und so in ausreichendem Maße gegenüber dem äußeren Plattenabschnitt elastisch gehalten ist.

Die einteilig ausgebildete Entkopplungsplatte an sich bleibt dabei im Wesentlichen stabil, was sich gerade für den Fall einer Fehlbestückung der Wuchteinrichtung positiv auswirkt, da die Stabilität der Entkopplungsplatte im Wesentlichen erhalten bleibt und so beispielsweise einer Überbelastung wie bei den im Stand der Technik bekannten Federelementen erfolgreich entgegengewirkt wird.

Bei einer bevorzugten Ausführungsform der Erfindung ist vorgesehen, dass sich die Umfangsschlitze jeweils über eine Länge von wenigstens 70%, insbesondere wenigstens 80% der Gesamtlänge des jeweiligen Halteabschnittes auf der Entkopplungsplatte erstrecken.

In bevorzugter Weise ist die Entkopplungsplatte kreisförmig ausgebildet und die Umfangsschlitze der Halteabschnitte verlaufen jeweils parallel zu den Außenwandungen des äußeren Plattenabschnittes.

Die Umfangsschlitze definieren jeweils wenigstens einen Halteabschnitt, wobei die Umfangsschlitze derart entlang des inneren und äußeren Plattenabschnittes ausgebildet sind, dass sie an die zu erwartende Art der bei der Rotation des Rotationselementes entstehenden Kräfte und Momente angepasst sind.

An Endbereichen der Umfangsschlitze können zumindest teilweise Ausnehmungen, insbesondere in Form von Federstegen oder -nasen in der Entkopplungsplatte vorgesehen sein. Dabei können die Federstege oder -nasen an den Endbereichen der Umfangsschlitze parallel zueinander verlaufen und insbesondere parallel zu einer zwischen den Halteabschnitten liegenden Längsmittelebene der Entkopplungsplatte ausgerichtet sein.

Benachbarte Halteabschnitte können unmittelbar durch Vorsehen mindestens einer Ausnehmung voneinander getrennt werden, wenn beispielsweise Umfangsschlitze der beiden benachbarten Halteabschnitte in die gleiche Ausnehmung münden. So ist es möglich, mindestens zwei benachbarte Umfangsschlitze unmittelbar durch jeweils radial verlaufende Ausnehmungen voneinander zu trennen.

Alternativ ist es auch möglich, die Umfangsschlitze beabstandet zueinander anzuordnen und zur Bildung der Halteabschnitte zumindest teilweise in ihren Endbereichen überlappend auszubilden beziehungsweise Ausnehmungen in den Endbereichen der Umfangsschlitze so anzuordnen, dass sie überlappend angeordnet sind.

Gemäß einer Ausführungsform der Erfindung ist vorgesehen, dass eine geradzahlige Anzahl von Halteabschnitten an der Grundplatte angeordnet sind, die insbesondere spiegelsymmetrisch zu einer Längsmittelebene der Entkopplungsplatte ausgebildet sein können.

Alternativ ist es auch möglich, insgesamt drei Halteabschnitte an der Entkopplungsplatte vorzusehen, die sich insbesondere jeweils in einem Winkelbereich von wenigstens 70°, insbesondere wenigstens 80° und besonders bevorzugt wenigstens 100° entlang des Umfangs des Grundkörpers erstrecken.

Natürlich ist es auch möglich, insgesamt zwei Paare von Halteabschnitten vorzusehen, die bezüglich zweier senkrecht zueinander stehende Längsmittelebenen des Grundkörpers spiegelsymmetrisch angeordnet und ausgebildet sind.

Die Umfangsschlitze und/oder die Ausnehmung können mittels Wasserstrahlschneiden und/oder Drahterosion in den Grundkörper eingebracht werden.

In einer besonders bevorzugten Ausführungsform der vorliegenden Erfindung ist ferner vorgesehen, dass das Rotationselement durch eine im Wesentlichen axiale Verschiebungen der an den Halteabschnitten vorgesehenen Hydraulikzylinder in der zentralen Aufnahme des Grundkörpers verspannt oder verspannbar ist.

Die Hydraulikzylinder sind an dem inneren Plattenabschnitt angeordnet und befestigt , so dass erreicht werden kann, dass sämtliche weiteren, an der Wuchteinrichtung vorgesehene Massen gesamthaft an dem ortsfest an dem zu der Wuchteinrichtung fixierten äußeren Plattenabschnitt verbleiben, so dass die Rotationsbewegung des Rotationselementes mit deutlich geringerer Zusatzmasse erfolgen kann, da lediglich eine Rotation des inneren Plattenabschnittes zusammen mit den Hydraulikzylindern erfolgen kann. Die Gefahr einer Verfälschung der Messergebnisse kann so deutlich verringert werden. Die Hydraulikzylinder können innerhalb des inneren Plattenabschnitts axial, also parallel zur Rotationsachse des Rotationselement derart verfahrbar sein, dass sich an die Hydraulikzylinder anschließende Hebelelemente durch deren axiale Verschiebung so verkippen lassen, dass sich eine kraft- und/oder formflüssige Verbindung zwischen den Hebelelementen und dem Rotationselement einstellt.

Eine Verbesserung der Automatisierbarkeit des Verfahrens zum Wuchten von Rumpfgruppen beziehungsweise Rotationselementen sieht vor, an dem äußeren ortsfesten Plattenabschnitt mehrere Pneumatikzylinder vorzusehen, um die Hydraulikzylinder und/oder die Hebelelemente nach Einsetzen des Rotationselementes in die zentrale Aufnahme an dem zu befestigenden Rotationselement zu positionieren und anschließend die ortsfest an dem äußeren Plattenabschnitt befestigten Pneumatikzylinder nach der Fixierung des Rotationselementes mittels der Hebelelemente in der zentralen Aufnahme zurückzufahren. So ist es möglich, eine automatische Positionierung der Hebelelemente an den zu befestigenden Rotationselement bereitzustellen und zu verhindern, dass weitere die Vibration des Rotationselement beeinträchtigende Massen den Wuchtvorgang beispielsweise durch die Pneumatikzylinder beeinflussen.

Um auch einen schnellen Ausbau des Grundkörpers aus der Wuchteinrichtung beispielsweise bei Wechsel der äußeren Abmessung des Rotationselementes bzw. der Rumpfgruppe zu ermöglichen, ist in einem Ausführungsbeispiel vorgesehen, dass die Wuchteinrichtung eine Basisplatte aufweist, mittels welcher die Wuchteinrichtung beispielsweise mit Druckluft und Hydrauliköl versorgt werden kann, an welche eine an dem Grundkörper vorgesehene Adapterplatte einfach aufgeschoben werden kann. So entfallen bei einem Werkzeugwechsel zusätzliche Arbeitsschritte wie beispielsweise Bereitstellung einer Luft- oder Hydraulikölzufuhr oder ähnliches.

Hinsichtlich weiterer vorteilhafter Ausgestaltung der Erfindung wird auf die Unteransprüche sowie die nachfolgende Beschreibung von Ausführungsbeispielen anhand der Zeichnungen verwiesen.

In der Zeichnung zeigt
- Figur 1: eine erfindungsgemäße Entkopplungsplatte in Draufsicht;

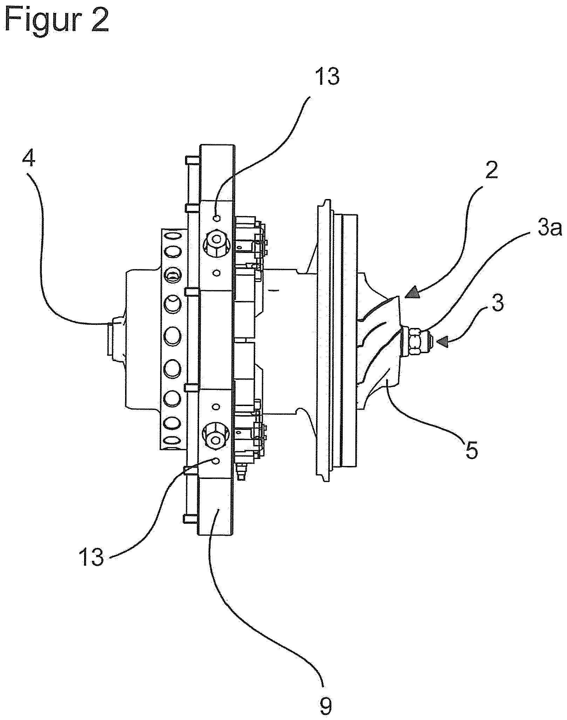

- Figur 2: eine erfindungsgemäße Entkopplungsplatte mit eingesetzter Rumpfgruppe von der Seite;

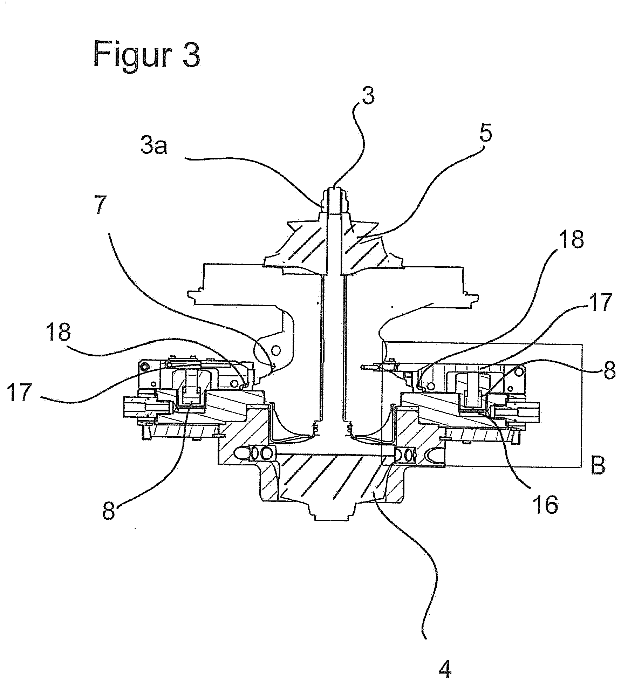

- Figur 3: eine Schnittdarstellung der Entkopplungsplatte entlang der Schnittlinie AA gemäß Figur 1; und

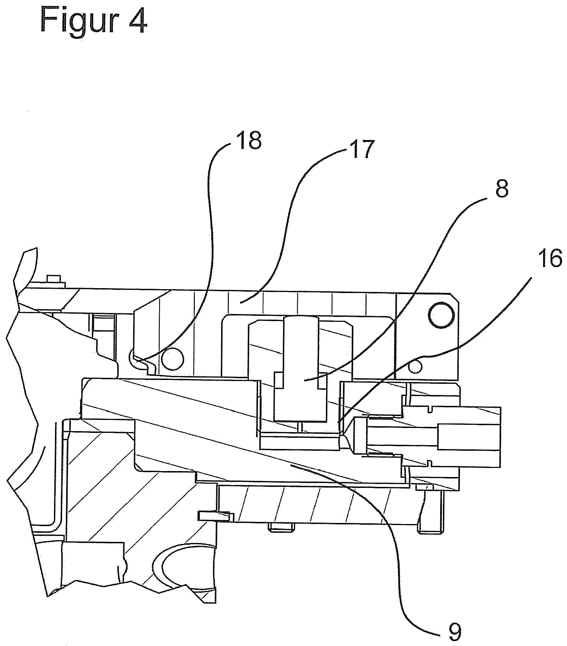

- Figur 4: eine Teildarstellung der erfindungsgemäßen Kopplungsplatte mit eingesetzter Rumpfgruppe gemäß Schnitt B-B in der Figur 3.

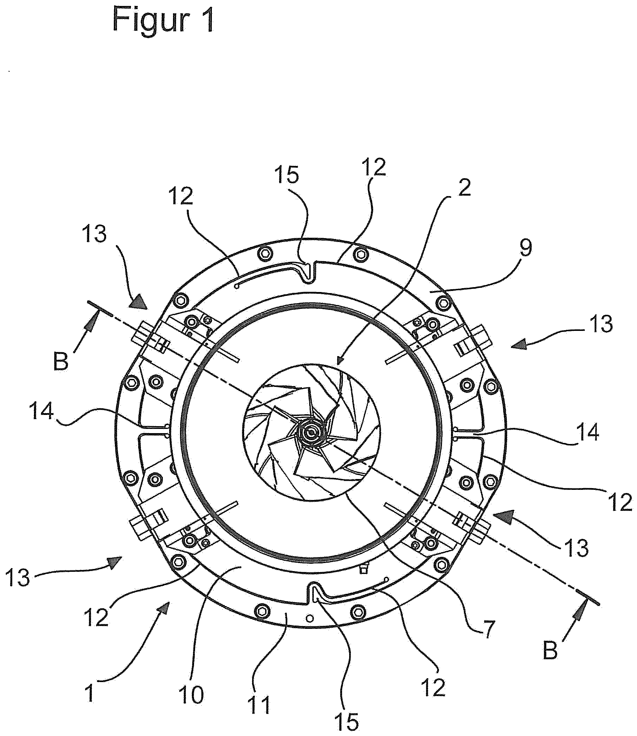

Die Figur 1 zeigt eine Wuchteinrichtung 1 für eine Rumpfgruppe 2 eines Turboladers. Die Rumpfgruppe 2 umfasst eine Welle 3, an deren Enden jeweils ein Turbinenrad 4 beziehungsweise ein Verdichterrad 5 des Turboladers befestigt und über eine Wellenmutter 3a fixiert sind.

Die Wuchteinrichtung 1 ist mit einem Grundkörper 6 versehen, der eine zentral angeordnete Aufnahme 7 aufweist, um die Rumpfgruppe 2 in die Aufnahme 7 einzuschieben und das Rotationselement 3, 4, 5 um seine Rotationsachse drehend über nicht näher dargestellte Lager zu halten. An dem Grundkörper 6 sind mehrere, um die Aufnahme 7 herum angeordnete Hydraulikzylinder 8 vorgesehen, mittels welcher die Rumpfgruppe 2 in der zentralen Aufnahme 7 befestigt ist.

Der Grundkörper 6 weist eine kreisförmige Entkopplungsplatte 9 auf, die einen inneren Plattenabschnitt 10 und einen mit dem inneren Plattenabschnitt 10 elastisch verbundenen, den inneren Plattenabschnitt 10 umgebenden, ortsfest in der Wuchteinrichtung 1 angeordneten äußeren Plattenabschnitt 11 umfasst.

In der Entkopplungsplatte 9 sind entlang des Umfangs der Entkopplungsplatte 9, d. h. entlang eines Kreisbogens um die zentrale Drehachse des Rotationselementes 3, 4, 5 angeordnete Umfangsschlitze 12 vorgesehen, über welche der innere Plattenabschnitt 10 vom äußeren Plattenabschnitt 11 federnd entkoppelt ist.

Die Umfangsschlitze 12 sind dabei so angeordnet, dass sie sich nahezu entlang des gesamten Umfangs des Entkopplungsplatte 9 erstrecken. Die einzelnen Umfangsschlitze 12 sind derart voreinander beabstandet, dass sich vier, voneinander getrennte Halteabschnitte 13 in der Entkopplungsplatte 9 ausbilden. Dazu sind die Umfangsschlitze 12 jeweils über eine Länge von 80 ° der Umfangslänge eines jeden Halteabschnittes 13 der Entkopplungsplatte 9 angeordnet.

An den Endbereichen der Umfangsschlitze 12 sind Ausnehmungen in Form von Federstegen 14 und Federnasen 15 in der Entkopplungsplatte 9 vorgesehen, die auf die zu erwartende Belastung in den Halteabschnitten13 angepasst ausgebildet sind, d.h. im Bereich von zu erwartenden Biege- und Torsionskräften als Federnasen 15, im Bereich von zu erwartenden durch Auf- und Abwärtsbewegungen hervorgerufenen Linearkräften als Federstege 14.

Wie in Figur 1 genauer zu sehen ist, handelt es sich bei den Endbereichen der Umfangsschlitze 12 in der 12-Uhr-Position und in der 6-Uhr-Position um Federnasen 15, die so angeordnet sind, dass sie sich beabstandet voneinander im Bereich der Ausbildung der Nasenform überlappen und dazu geeignet sind Schwingungen aufgrund von Rotationen zu komprimieren.

In der 3-Uhr und 9-Uhr-Position hingegen sind die Endbereiche zweier benachbarter Umfangsschlitze 12 als Federstege 14 ausgebildet, die sich beabstandet zueinander parallel zum Achsmittelpunkt der Entkopplungsplatte 9 hin erstrecken.

Zur Fixierung der Rumpfgruppe 2 an der Entkopplungsplatte 9 ist mit vier Halteabschnitten 13 eine geradzahlige Anzahl vorgesehen, die spiegelsymmetrisch zu einer Längsmittelebene der Entkopplungsplatte 9 angeordnet sind.

In einem nicht dargestellten Ausführungsbeispiel sind lediglich drei Halteabschnitte an der Entkopplungsplatte 9 vorgesehen, die sich jeweils über einen Winkelbereich von 100° entlang des Umfangs des Grundkörpers 6 erstrecken. Auf diese Ausführungsform wird in diesem Ausführungsbeispiel jedoch nicht weiter eingegangen.

Die Umfangsschlitze 12 und Ausnehmungen 14, 15 sind im vorliegenden Ausführungsbeispiel mittels Wasserstrahlschneiden in die Entkopplungsplatte 9 eingebracht worden. Die Entkopplungsplatte 9 ist demnach weiterhin einteilig ausgebildet. Durch die verschiedenen Ausbildungsformen der Umfangsschlitze 12 und Ausnehmungen 14, 15 und der zwischen ihnen ausgebildeten Stege 14a, 15a wird eine federnde Lagerung des inneren Plattenabschnittes 10 vom ortsfesten äußeren Plattenabschnitt 11 unter Ausgleich von Krafteinwirkungen aufgrund der mit der Rotation und der Massenbewegungen der verschiedenartigen Bauteile erreicht. Dies ist gleichzusetzen mit einer Entkopplung des inneren Plattenabschnitts 10 vom ortsfesten äußeren Plattenabschnitt 11, was mit einer deutlichen Reduktion der zu bewegenden Massen während des Wuchtungsvorganges einhergeht.

Um die Rumpfgruppe 2 in der zentralen Aufnahme 7 der Entkopplungsplatte 9 zu fixieren, werden zunächst an dem äußeren Plattenabschnitt 11 angebrachte, nicht dargestellte Pneumatikzylinder ausgefahren. Dieses Verfahren der Pneumatikzylinder ruft eine im Wesentlichen kraftlose Verschiebung der an dem inneren Plattenabschnit 10 angeordneten Hydraulikzylinder 8 innerhalb einer in dem inneren Plattenabschnitt 11 vorgesehenen Ausnehmung 16 hervor, Durch Positionierung der Hydraulikzylinder können an den Hydraulikzylinder 8 anschließende Hebelelemente 17 verkippt werden, was eine Fixierung der Rumpfgruppe 2 mittels daran vorgesehenen Halteflanschen 18 ermöglichen.

Dies erfolgt durch eine im Wesentlichen axiale Verschiebung der Hydraulikzylinder 8 also auch achsparallel zur zentralen Achse der Rumpfgruppe 2, was zu einer Verkippung der sich daran anschließenden Hebelelemente 17 führt, wodurch die Hebelelemente 17 mit dem Halteflansch 18 der Rumpfgruppe 2 in Verbindung gelangen und so die Rumpfgruppe 2 in gespannter Position an dem inneren Plattenabschnitt 11 fixiert wird. Mit anderen Worten wird durch die im Wesentlichen axiale beziehungsweise achsparallele Verschiebung der Hydraulikzylinder 8 eine kraft- und/oder formschlüssigen Verbindung zwischen den Hebelelementen 17 und der Rumpfgruppe 2 erreicht.

## Patentansprüche

1. Wuchteinrichung (1), für Turbolader, mit einem Grundkörper (6), der eine zentral angeordnete Aufnahme (7) aufweist, in welcher ein zu wuchtendes Rotationselement (3, 4. 5), insbesondere eine Welle (3) eines Turboladers, axial einschiebbar ist, um das Rotationselement (3, 4, 5) in der Aufnahme (7) um dessen Rotationsachse drehend zu halten, wobei an dem Grundkörper (6) mehrere, um die zentrale Aufnahme (7) herum angeordnete Hydraulikzylinder (8) vorgesehen sind, mittels welcher das Rotationselement in der zentralen Aufnahme (7) fixierbar ist, wobei der Grundkörper (6) als Entkopplungsplatte (9) ausgebildet ist, die einen inneren Plattenabschnitt (10) und einen mit dem inneren Plattenabschnitt (10) elastisch verbundenen, den inneren Plattenabschnitt (10) umgebenden, ortsfest angeordneten äußeren Plattenabschnitt (11) aufweist, wobei die Entkopplungsplatte (9) mehrere Umfangsschlitze (12) aufweist, über welche der innere Plattenabschnitt (10) vom äußeren Plattenabschnitt (11) federnd entkoppelt ist, derart, dass sich mehrere, voneinander getrennte Halteabschnitte (13) auf der Entkopplungsplatte (9) bilden, **dadurch gekennzeichnet, dass** die Hydraulikzylinder (8) an dem inneren Plattenabschnitt (10) angeordnet und befestigt sind.

2. Wuchteinrichtung nach Anspruch 1, **dadurch gekennzeichnet, dass** das Rotationselement eine Rumpfgruppe (2) des Turboladers ist.

3. Wuchteinrichtung (1) nach Anspruch 1 oder 2, **dadurch gekennzeichnet, dass** sich die Umfangsschlitze (12) jeweils über eine Länge von wenigstens 70%, insbesondere wenigstens 80% der Gesamtlänge eines jeden Halteabschnittes (13) der Entkopplungsplatte (9) erstrecken.

4. Wuchteinrichtung (1) nach einem der Ansprüche 1 bis 3, **dadurch gekennzeichnet, dass** an den Endbereichen der Umfangsschlitze (12) zumindest teilweise Ausnehmungen, insbesondere Federstege (14) oder -nasen (15) in der Entkopplungsplatte (9) vorgesehen sind.

5. Wuchteinrichtung (1) nach Anspruch 4, **dadurch gekennzeichnet, dass** mindestens zwei benachbarte Umfangsschlitze (12) unmittelbar durch jeweils radial verlaufende Ausnehmungen (14, 15) voneinander getrennt sind.

6. Wuchteinrichtung (1) nach einem der Ansprüche 1 bis 4, **dadurch gekennzeichnet, dass** sich die Umfangsschlitze (12) beabstandet zueinander ausgebildet sind und sich zur Bildung der Halteabschnitte (13) zumindest teilweise in ihren Endbereichen überlappen.

7. Wuchteinrichtung (1) nach einem der vorhergehenden Ansprüche, **dadurch gekennzeichnet, dass** eine geradzahlige Anzahl von Halteabschnitten (13) vorgesehen sind, die spiegelsymmetrisch zu einer Längsmittelebene der Entkopplungsplatte (9) angeordnet und ausgebildet sind.

8. Wuchteinrichtung (1) nach einem der Ansprüche 1 bis 6, **dadurch gekennzeichnet, dass** insgesamt drei Halteabschnitte (13) an der Entkopplungsplatte (9) vorgesehen sind, die sich insbesondere jeweils über einen Winkelbereich von wenigstens 70°, insbesondere wenigstens 80° und besonders bevorzugt wenigstens 100° entlang des Umfangs des Grundkörpers (6) erstrecken.

9. Wuchteinrichtung (1) nach einem der vorhergehenden Ansprüche, **dadurch gekennzeichnet, dass** das Rotationselement (3, 4, 5) durch eine im Wesentlichen axiale Verschiebung der Hydraulikzylinder (8) in der zentralen Aufnahme (7) des Grundkörpers (6) verspannt oder verspannbar ist.

10. Wuchteinrichtung (1) nach einem der vorhergehenden Ansprüche, **dadurch gekennzeichnet, dass** die Hydraulikzylinder (8) innerhalb des inneren Plattenabschnittes (10) achsparallel zur Rotationsachse des Rotationselements (3, 4, 5) derart verfahrbar sind, dass sie an die Hydraulikzylinder (8) sich anschließende Hebelelemente (17) so verschieben, dass sich eine kraft- und/oder formflüssige Verbindung zwischen den Hebelelementen (17) und der Rumpfgruppe (2) einstellt.

11. Wuchteinrichtung (1) nach einem der vorhergehenden Ansprüche, **dadurch gekennzeichnet, dass** an dem äußeren ortsfesten Plattenabschnitt (11) mehrere Pneumatikzylinder vorgesehen sind, um die Hydraulikzylinder (8) und/ oder die Hebelelemente (17) an der Rumpfgruppe (2) zu positionieren.

12. Wuchteinrichtung (1) nach einem der vorhergehenden Ansprüche, **dadurch gekennzeichnet, dass** sie eine Adapterplatte aufweist, die zur Speisung des Grundkörpers (6) der Wuchteinrichtung (1) mit Druckluft und Hydrauliköl mit einer in der Wuchteinrichtung (1) fixierten Basisplatte koppelbar ist.

13. Verfahren zur Herstellung einer Wuchteinrichtung nach einem der Ansprüche 1 bis 12, **dadurch gekennzeichnet, dass** die Umfangsschlitze (12) und/oder die Ausnehmungen (14, 15) mittels Wasserstrahlschneiden und/oder mittels Drahterosion in den Grundkörper (6) eingebracht sind.

## Claims

1. Balancing device (1) for turbochargers, having a base body (6), which has centrally arranged receptacle (7), in which a rotary element (3, 4, 5) to be balanced, in particular a shaft (3) of a turbocharger, can be inserted axially in order to hold the rotary element (3, 4, 5) such that it rotates about its axis of rotation, a plurality of hydraulic cylinders (8) arranged around the central receptacle (7) being provided on the base body (6), by means of which hydraulic cylinders (8) the rotary element can be fixed in the central receptacle (7), wherein the base body (6) is formed as a decoupling plate (9), which has an inner plate section (10) and an outer plate section (11) elastically connected to the inner plate section (10) and surrounding the inner plate section (10), the decoupling plate (9) having a plurality of circumferential slots (12) via which the inner plate section (10) is resiliently decoupled from the outer plate section (11) in such a way that a plurality of holding sections (13) separated from one another are formed on the decoupling plate (9), **characterized in that** the hydraulic cylinders (8) are arranged and fastened on the inner plate section (10).

2. Balancing device according to claim 1, **characterized in that** the rotary element is a body assembly (2) of the turbocharger.

3. Balancing device (1) according to claim 1 or 2 **characterized in that** the circumferential slots (12) each extend over a length of at least 70%, in particular at least 80%, of the total length of each holding section (13) of the decoupling plate (9).

4. Balancing device (1) according to any of claims 1 to 3, **characterized in that** recesses, in particular spring bars (14) or spring lugs (15) are provided at least partially in the decoupling plate (9) at the end regens of the circumferential slots (12).

5. Balancing device (1) according to claim 4, **characterized in that** at least two adjacent circumferential slots (12) are directly separated from each other by recesses (14, 15) extending radially in each case.

6. Balancing device (1) according to any of claims 1 to 4, **characterized in that** the circumferential slots (12) are formed at a distance from one another and overlap at least partially in their end regions to form the holding sections (13).

7. Balancing device (1) according to any of the preceding claims, **characterized in that** an even number of holding sections (13) are provided, which are arranged and formed mirror-symmetrically to a longitudinal central plane of the decoupling plate (9).

8. Balancing device (1) according to any of claims 1 to 7, **characterized in that** a total of three holding sections (13) are provided on the decoupling plate (9), which in particular each extend over an annular range of at least 70°, in particular at least 80° and particularly preferably at least 100° along the circumference of the base body (6).

9. Balancing device (1) according to any of the preceding claims, **characterized in that** the rotary element (3, 4, 5) is braced or can be braced in the central receptacle (7) of the base body (6) by a substantially axial displacement of the hydraulic cylinders (8).

10. Balancing device (1) according to any of the preceding claims, **characterized in that** the hydraulic cylinders (8) are displaceable within the inner plate section (10) axially parallel to the axis of rotation of the rotary element (3, 4, 5) in such a way that they displace lever elements (17) adyoining the hydraulic cylinders (8) such that a frictional and/or form-fit connection is established between the lever elements (17) and the body assembly (2).

11. Balancing device (1) according to any of the preceding claims, **characterized in that** a plurality of pneumatic cylinders are provided on the outer stationary plate section (11) in order to position the hydraulic cylinders (8) and/or the lever elements (17) on the body assembly (2).

12. Balancing device (1) according to any of the preceding claims, **characterized in that** it comprises an adaptor plate, which can be coupled to a base plate fixed in the balancing device (1) for feeding the base body (6) of the balancing device (1) with compressed air and hydraulic oil.

13. Method of manufacturing a balancing device according to any of claims 1 to 12, **characterized in that** the circumferential slots (12) and/or the recesses (14, 15) are introduced into the base body (6) by means of water jet cutting and/or by means of wire erosion.

## Revendications

1. Dispositif d'équilibrage (1) pour turbocompresseurs, comprenant un corps de base (6) qui présente un réceptacle (7) disposé au centre, dans lequel un élément rotatif (3, 4. 5) à équilibrer, en particulier un arbre (3) d'un turbocompresseur, peut être inséré axialement afin de maintenir l'élément rotatif (3, 4, 5) dans le réceptacle (7) de manière à ce qu'il tourne autour de son axe de rotation, une pluralité de cylindres hydrauliques (8) disposés autour du réceptacle central (7) étant prévus sur le corps de base (6), au moyen duquel l'élément rotatif peut être fixé dans le réceptacle central (7), le corps de base (6) étant conçu comme une plaque de découplage (9) qui présente une section de plaque intérieure (10) et une section de plaque extérieure (11) disposée en position fixe qui est reliée élastiquement à la section de plaque intérieure (10), la section de plaque intérieure (10) et qui entoure la section de plaque intérieure (10), la plaque de découplage (9) présentant plusieurs fentes périphériques (12) par lesquelles la section de plaque intérieure (10) est découplée de manière élastique de la section de plaque extérieure (11) de telle sorte que plusieurs sections de retenue (13) séparées les unes des autres sont réalisées sur la plaque de découplage (9), **caractérisé en ce que** les cylindres hydrauliques (8) sont disposés et fixés sur la section de plaque intérieure (10).

2. Dispositif d'équilibrage selon la revendication 1, **caractérisé en ce que** l'élément rotatif est un ensemble de tronc (2) du turbocompresseur.

3. Dispositif d'équilibrage (1) selon la revendication 1 ou 2, **caractérisé en ce que** les fentes périphériques (12) s'étendent chacune sur une longueur d'au moins 70%, en particulier d'au moins 80%, de la longueur totale de chaque section de retenue (13) de la plaque de découplage (9).

4. Dispositif d'équilibrage (1) selon l'une des revendications 1 à 3, **caractérisé en ce que** des évidements, en particulier des barres à ressort (14) ou des pattes de ressort (15), sont prévus au moins partiellement dans la plaque de découplage (9) dans les zones d'extrémité des fentes périphériques (12).

5. Dispositif d'équilibrage (1) selon la revendication 4, **caractérisé en ce qu'**au moins deux fentes périphériques adjacentes (12) sont directement séparées l'une de l'autre par des évidements (14, 15) s'étendant chacun radialement.

6. Dispositif d'équilibrage (1) selon l'une des revendications 1 à 4, **caractérisé en ce que** les fentes périphériques (12) sont formées à distance les unes des autres et se chevauchent au moins partiellement dans leurs zones d'extrémité pour former les sections de retenue (13).

7. Dispositif d'équilibrage (1) selon l'une des revendications précédentes, **caractérisé en ce qu'**il est prévu un nombre pair de sections de retenue (13), qui sont disposées et formées de manière symétrique par rapport à un plan médian longitudinal de la plaque de découplage (9).

8. Dispositif d'équilibrage (1) selon l'une des revendications 1 à 6, **caractérisé en ce que** sur la plaque de découplage (9) sont prévues au total trois sections de retenue (13), dont chacune s'étend notamment sur une plage angulaire d'au moins 70°, en particulier d'au moins 80° et de manière particulièrement préférée d'au moins 100° le long de la circonférence du corps de base (6).

9. Dispositif d'équilibrage (1) selon l'une des revendications précédentes, **caractérisé en ce que** l'élément rotatif (3, 4, 5) est bloqué ou peut être bloqué dans le réceptacle central (7) du corps de base (6) par un déplacement sensiblement axial des cylindres hydrauliques (8).

10. Dispositif d'équilibrage (1) selon l'une des revendications précédentes, **caractérisé en ce que** les cylindres hydrauliques (8) sont déplaçables à l'intérieur de la section de plaque intérieure (10) parallèlement à l'axe de rotation de l'élément rotatif (3, 4, 5) de telle sorte qu'ils déplacent des éléments de levier (17) adjacents aux cylindres hydrauliques (8) de telle sorte qu'une liaison par force et/ou par forme est établie entre les éléments de levier (17) et l'ensemble de tronc (2).

11. Dispositif d'équilibrage (1) selon l'une des revendications précédentes, **caractérisé en ce qu'**une pluralité de cylindres pneumatiques sont prévus sur la section de plaque fixe extérieure (11) pour positionner les cylindres hydrauliques (8) et/ou les éléments de levier (17) sur l'ensemble de tronc (2).

12. Dispositif d'équilibrage (1) selon l'une des revendications précédentes, **caractérisé en ce qu'**il comprend une plaque d'adaptation qui peut être couplée à une plaque de base fixée dans le dispositif d'équilibrage (1) pour alimenter le corps de base (6) du dispositif d'équilibrage (1) en air comprimé et en huile hydraulique.

13. Procédé de fabrication d'un dispositif d'équilibrage selon l'une des revendications 1 à 12, **caractérisé en ce que** les fentes périphériques (12) et/ou les évidements (14, 15) sont introduits dans le corps de base (6) au moyen d'une découpe au jet d'eau et/ou au moyen d'une érosion par fil.
